# EUROPEAN PATENT APPLICATION

(11) **EP 4 841 455 A1**
(43) Date of publication of application: **18.11.2026**
(21) Application number: 25305691.5
(22) Date of filing: 14.05.2025
(51) Int. Cl.: G06F 13/28, G06F 13/38, G06F 13/42

(54) **LOW-LATENCY PCI EXPRESS TSN ETHERNET CONTROLLER**

(71) Applicant: Mitsubishi Electric R&D Centre Europe B.V., 1119 NS Schiphol Rijk Amsterdam (NL); MITSUBISHI ELECTRIC CORPORATION, Chiyoda-ku Tokyo 100-8310 (JP)
(72) Inventor: MANGIN, Christophe, 35708 Rennes Cedex 7 (FR)
(74) Representative: Plasseraud IP

(57) **Abstract**

The disclosure relates to a method for managing data communication in a networked environment, the method being implemented by a reception module (82) operably connected to a memory (80) via a PCI Express bus and to a network interface, the method comprising, after data is obtained using the network interface during a time interval reserved for deterministic cyclic real-time communications:
issuing, during the time interval, a PCI Express transaction layer packet specifying a memory write operation (92a, 92b), the transaction layer packet being configured to initiate a direct memory access transfer of at least a portion of the obtained data to a write address in the memory, wherein the write address is reserved for incoming deterministic cyclic real-time communications.

## Description

### DOMAIN

The present invention relates to telecommunications and more particularly to methods for managing data communication in a networked environment, to a computer program, to a reception module, to a transmission module and to a communication device.

### BACKGROUND

In conventional PCI Express-based network controllers, data transfers between the host CPU and the controller often suffer from latency due to excessive CPU intervention, inefficient memory accesses, and non-deterministic scheduling of packet transfers. Existing implementations rely on interrupt-driven processing and non-posted memory transactions that introduce overhead, making them unsuitable for real-time applications requiring precise timing guarantees. In industrial automation and TSN-based communication, where cyclic real-time processing is required, current network controllers fail to provide predictable, low-latency data transmission and reception.

There is a need for devices and methods that enable overcoming the above limitations.

### SUMMARY

The invention is defined by the appended independent claims. Additional features and advantages of the concepts herein disclosed are set forth in the description which follows.

The present disclosure aims at improving the situation.

To this end, the present disclosure describes a method for managing data communication in a networked environment, the method being implemented by a reception module operably connected to a memory via a PCI Express bus and to a network interface, the method comprising, after data is obtained using the network interface during a time interval reserved for deterministic cyclic real-time communications:
issuing, during the time interval, a PCI Express transaction layer packet specifying a memory write operation, the transaction layer packet being configured to initiate a direct memory access transfer of at least a portion of the obtained data to a write address in the memory, wherein the write address is reserved for incoming deterministic cyclic real-time communications.

By issuing a PCI Express transaction layer packet specifying a memory write operation during the reserved time interval, the proposed method may facilitate timely storage of incoming data in system memory, helping to meet the timing constraints of deterministic cyclic real-time communications. The use of Direct Memory Access (DMA) transfers may allow data to be written directly to memory without requiring CPU intervention, thereby reducing processing overhead and limiting potential delays associated with CPU-controlled data transfers. Furthermore, because the memory write operation occurs within a defined time interval, buffer management can be performed predictably, which may contribute to more efficient handling of successive real-time data frames. This technique may also support data consistency across communication cycles, as each portion of the obtained data is stored at a designated memory location.

In an example, the write address is obtained from a buffer descriptor, and the buffer descriptor includes an address field specifying the write address.

This approach may help prevent unpredictable address assignment, which could otherwise lead to memory conflicts between consecutive communication cycles. Additionally, by systematically managing buffer descriptors, the proposed technique may reduce the risk of race conditions or memory corruption in environments where multiple data streams are processed concurrently. The use of a pre-allocated buffer descriptor structure may contribute to reducing lookup times, which can support more efficient memory management during real-time data transfers.

In an example, the buffer descriptor includes a validity field, and the validity field is updated upon a completion of the write operation at the write address.

The inclusion of a validity field in the buffer descriptor may facilitate synchronization between the network controller and host software. Updating this field upon completion of the memory write operation may allow the system to indicate when data is fully available for processing, helping to prevent premature access to incomplete or corrupted data. This mechanism may contribute to more reliable buffer reuse, as memory blocks are only released when their contents are confirmed to be valid. Additionally, by ensuring that only fully written data is marked as available, this technique may help reduce synchronization overhead and support data integrity across multiple time intervals.

In an example, the method further comprises updating, outside the time intervals reserved for deterministic cyclic real-time communications, the buffer descriptor so as to ensure that the buffer descriptor is up-to-date before being used for the memory write operation.

Updating the buffer descriptor outside the reserved real-time communication intervals may help to avoid contention between real-time data transfers and buffer management operations. This mechanism may allow buffer descriptors to be refreshed without interfering with ongoing PCI Express transactions, contributing to a more predictable and structured approach to memory management. Additionally, ensuring that the buffer descriptor list remains valid before each memory write operation may contribute to system stability and may help to prevent unintended data overwrites or buffer underruns in cyclic real-time communication environments.

The present disclosure also describes a method for managing data communication in a networked environment, the method being implemented by a transmission module operably connected to a memory via a PCI Express bus and to a network interface, the method comprising:
issuing, between two consecutive time intervals reserved for deterministic cyclic real-time communications, a PCI Express transaction layer packet specifying a memory read operation, the transaction layer packet being configured to initiate a direct memory access transfer of data from a read address in the memory, the read address being reserved for outgoing deterministic cyclic real-time communications,
obtaining the data from the read address, and
transmitting the obtained data using the network interface during the next time interval reserved for deterministic cyclic real-time communications after the data has been obtained.

By issuing a PCI Express transaction layer packet specifying a memory read operation between consecutive time intervals, the method may support preloading of outgoing data into the transmission buffer before the next real-time communication cycle begins. This mechanism may contribute to reducing potential transmission delays by ensuring that data is available ahead of the designated transmission slot, rather than being fetched at the last moment. Furthermore, by structuring memory read operations to occur between real-time communication intervals, this approach may contribute to a more predictable scheduling of data retrieval. This mechanism may also support more efficient handling of high-priority cyclic transmissions, in a scenario where the transmission buffer is populated in advance, helping to ensure that packets are ready for immediate transmission at the allocated time slot.

In an example, the read address is obtained from a buffer descriptor before issuing the PCI Express transaction layer packet, and the buffer descriptor includes an address field specifying the read address.

Retrieving the read address from a buffer descriptor before issuing the PCI Express transaction layer packet may help ensure that memory read operations occur at predefined locations, avoiding unpredictable memory access delays. This mechanism may contribute to structured buffer management, facilitating seamless transitions between consecutive cycles without requiring dynamic memory allocation. Additionally, by maintaining a clear mapping between memory locations and scheduled transmissions, the system may reduce read request latency, which can be particularly beneficial for high-speed, time-sensitive applications.

In an example, the buffer descriptor includes a validity field, and the validity field is updated upon a completion of the read operation at the read address, thereby releasing the read address for use in a subsequent time interval.

The validity field in the buffer descriptor may serve as a mechanism for coordinating memory access between the transmission module and host software. Updating this field upon completion of the read operation may help ensure that the same memory location is not reused before the corresponding data has been transmitted. This mechanism may help prevent unintentional overwriting of outgoing data, contributing to consistent buffer availability across multiple time intervals. Furthermore, by allowing buffers to be marked as available only when their contents are no longer needed, this approach may facilitate structured buffer recycling, potentially supporting more efficient memory allocation without risking data loss.

In an example, the transaction layer packet specifying the memory read operation is issued at a predefined offset before the beginning of the next time intervale reserved for deterministic cyclic real-time communications, the offset being at least equal to a worst-case completion latency of the memory read operation.

By issuing the transaction layer packet specifying the memory read operation at a predefined offset before the start of the next reserved time interval, the system may help ensure that data retrieval is completed in advance of transmission. The offset may be selected based on the worst-case completion latency of the memory read operation, helping to account for fluctuations in memory access time. This approach may contribute to reducing jitter and may help ensure that data is available in the transmission buffer when needed, thereby facilitating predictable real-time data transmission.

In examples of any one of the methods hereby described, the buffer descriptor is previously stored in or accessible to a network controller so that the address specified by the PCI Express transaction layer packet is made available without delay.

By storing buffer descriptors in a location accessible to the network controller, the proposed method may help reduce memory access latency by ensuring that the memory address required for PCI Express transactions is immediately retrievable. This approach may help avoid the need for last-minute memory lookups, which could otherwise introduce delays in the transmission or reception process. Additionally, by making buffer descriptor information readily available to the network controller, this mechanism may contribute to more consistent execution of PCIe read and write operations, helping to support deterministic cyclic real-time communications.

In examples of any one of the methods hereby described, the address field remains unchanged across multiple consecutive time intervals reserved for deterministic cyclic real-time communications.

Retaining consistent memory addresses across consecutive transmission cycles may help reduce the complexity of memory management by avoiding the need for dynamic address allocation between cycles. This approach may contribute to predictable buffer usage patterns, which can be particularly beneficial in cyclic control loops, where the same data structures are frequently reused. Additionally, by maintaining stable address assignments, this mechanism may help reduce the risk of memory fragmentation and may facilitate more structured buffer management in real-time applications.

In examples of any one of the methods hereby described, the deterministic cyclic real-time communications are defined according to a Time-Sensitive Networking standard.

The present disclosure also describes a computer program comprising instructions that are accessible to a processor operably connected to a memory via a PCI Express bus and to a network interface and which, when executed by the processor, cause the processor to carry out any one of the methods hereby described.

The present disclosure also describes a reception module comprising a processor operably connected to a memory via a PCI Express bus and to a network interface, the reception module being configured to:
obtain data using the network interface during a time interval reserved for deterministic cyclic real-time communications, and
issue, during the time interval, a PCI Express transaction layer packet specifying a memory write operation, the transaction layer packet being configured to initiate a direct memory access transfer of at least a portion of the obtained data to a write address in the memory, wherein the write address is reserved for incoming deterministic cyclic real-time communications.

The present disclosure also describes a transmission module comprising a processor operably connected to a memory via a PCI Express bus and to a network interface, the transmission module being configured to:
issue, between two consecutive time intervals reserved for deterministic cyclic real-time communications, a PCI Express transaction layer packet specifying a memory read operation, the transaction layer packet being configured to initiate a direct memory access transfer of data from a read address in the memory, the read address being reserved for outgoing deterministic cyclic real-time communications,
obtain the data from the read address, and
transmit the obtained data using the network interface during the next time interval reserved for deterministic cyclic real-time communications after the data has been obtained.

The present disclosure also describes a communication device comprising the reception module and the transmission module hereby described.

### BRIEF DESCRIPTION OF THE DRAWINGS

Figure 1 depicts a fabric topology adapted for connecting modules using PCI Express, as known from prior art.
Figure 2 depicts a general structure of PCIe Transaction Layer Packet format, as known from prior art.
Figure 3 depicts a general structure of a physical layer packet comprising a PCIe Transaction Layer Packet as known from prior art.
Figure 4 depicts the general functional structure of a PCIe Network controller as known from prior art.
Figure 5 depicts a management process for handling the reception of packets as known from prior art.
Figure 6 depicts a management process for handling the transmission of packets as known from prior art.
Figure 7 depicts timing relationships between a network cycle and an application cycle in a scenario involving cyclic real-time communications and a control loop function, as known from prior art.
Figure 8 depicts possible data structures of a reception module operably connected to a Host memory via a PCI Express bus and to a network interface, according to an example of the proposed technique.
Figure 9 depicts a possible series of cyclic reception operations in terms of PCIe transactions between a memory and a reception module, according to an example of the proposed technique.
Figure 10 depicts data structures of a transmission module operably connected to a Host memory via a PCI Express bus and to a network interface, according to an example of the proposed technique.
Figure 11 depicts a possible series of cyclic transmission operations in terms of PCIe transactions between a memory and a transmission module, according to an example of the proposed technique.
Figure 12 depicts possible timing relationships between a network cycle and an application cycle in a scenario involving cyclic real-time communications and a control loop function, according to an example of the proposed technique.

### DETAILED DESCRIPTION

The present disclosure focuses on managing data communication in a networked environment where deterministic cyclic real-time communications are required. Deterministic cyclic real-time communications refer to a communication method where data exchanges occur at predefined, recurring time intervals with strict timing guarantees. Such environments are commonly found in various types of interconnected computing systems, including Time-Sensitive Networking (TSN), industrial automation, and other telecommunication systems where strict timing constraints must be met to ensure reliable and predictable data transmission.

In the considered context, PCI Express (PCIe) is used as a high-speed interconnect between a network controller and a memory, facilitating direct memory access (DMA) transfers.

A network controller, in this context, is a hardware module managing PCIe-based packet transmission and reception.

A DMA transfer, in this context, is a direct transfer of data between a memory and the network controller, bypassing the CPU of the device hosting the memory.

A challenge lies in ensuring that data reception and transmission occur at precise time intervals, while efficiently handling memory accesses through PCIe Transaction Layer Packets (TLPs).

The proposed methods and systems provide mechanisms for:
receiving network data within allocated time intervals and efficiently storing it in system memory, and/or
transmitting data at the correct time while optimizing memory read operations, and/or
managing buffer descriptors to maintain synchronization across multiple real-time communication cycles.

By addressing these aspects, the proposed methods and systems enable efficient real-time data processing while ensuring compliance with TSN standards and PCIe communication protocols.

Some technical explanations specific to the field of networked environments and to the considered context are now provided to facilitate the understanding of the proposed technique.

### Introduction to PCI Express architecture

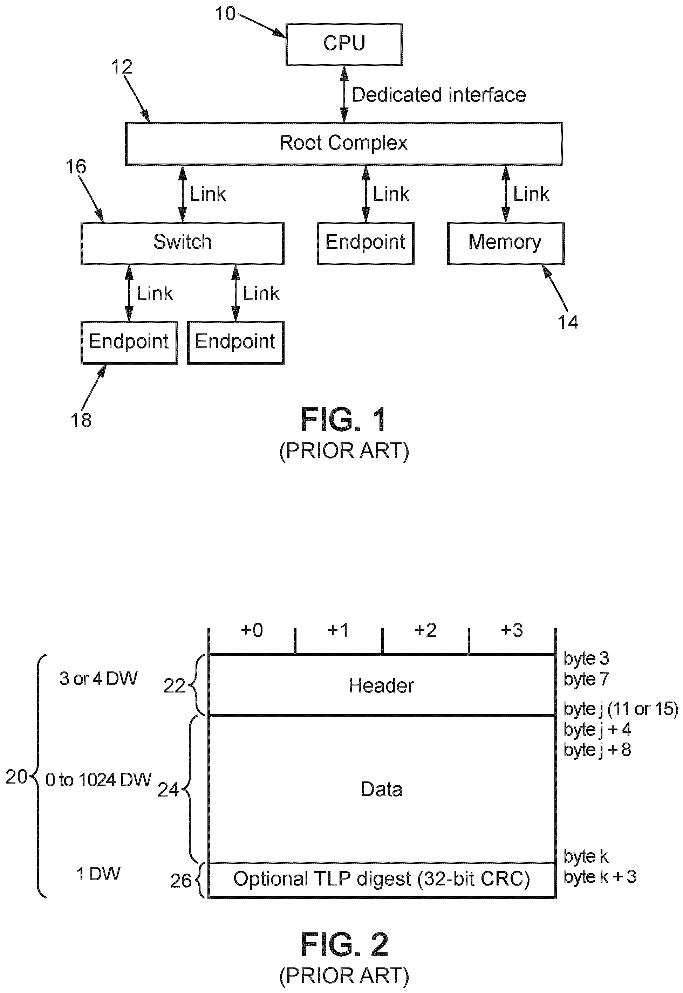

Peripheral Component Interconnect Express, or PCI Express, or PCIe, is based on a point-to-point topology, where dedicated serial links connect multiple peripherals and modules are connected through an infrastructure, or fabric. An example fabric topology is shown on Figure 1.

PCIe relies on a directional hierarchy where a main CPU 10 (or processor subsystem) sits at the top and is connected to a 'Root Complex' 12 (RC) through a dedicated interface. This Root Complex is the top level PCIe interconnect component and is typically connected to a main memory 14. The main CPU accesses the main memory through the Root Complex.

The Root Complex includes a limited number of PCIe interfaces. To expand the number of supported peripherals, 'switches' 16 offering several PCIe interfaces may be attached to a root complex PCIe interface. A switch may have one or more of its interfaces connected to other switches to allow further system expansion. Eventually 'End Points' 18 (EP) may be connected to the PCIe interfaces. An End Point may be a part of a peripheral device, such as a graphics card, an Ethernet network card, etc...

PCI Express devices communicate via a logical connection called an interconnect or link. A link is a point-to-point communication channel between two PCI Express ports allowing both of them to send and receive PCI requests (configuration, I/O or memory read/write) and interrupts (INTx, MSI or MSI-X). At the physical level, a link is composed of one or more lanes, depending on the peripheral's speed requirements.

A lane is composed of two differential signaling pairs: one pair for receiving data and the other for transmitting, resulting in four wires or signal traces. Each lane is used to transport a full-duplex byte stream. PCI Express links may contain 1, 4, 8, 16 or 32 lanes, the lane count being denoted using an "x" prefix, e.g., "x8" representing an eight-lane PCIe link.

Each serial link is bidirectional, with a 'downstream' direction (from an upstream component e.g., RC to a Switch or EP) and an 'upstream' direction (from a downstream component e.g., EP to switch/RC). The communications over the serial links are defined based on a 3-layer model comprising a Physical Layer', a 'Data Link Layer' and a 'Transaction Layer'.

The Physical Layer handles electrical connections, serialization and encoding of the data, link initialization and training, and power states transitions.

The Data Link Layer sits on top of the Physical Layer and is involved in communication flow control, ACK and NAK replies for transactions and power management.

The Transaction Layer sits on top of the Data Link Layer and is involved with transporting data packets written to, or read from, the main memory or I/O peripherals. The Transaction Layer also offers a configuration space (set of control and status registers separated of the main address map) as well as read and write commands to access this space.

Whereas in a shared bus topology, the access to the bus transmission resource is arbitrated and limited to one master at a time in a single direction, each PCI Express link supports full-duplex communication between any two endpoints, with no limitation on concurrent access across multiple endpoints. Furthermore, the PCI Express clocking scheme does not adapt the bus clock to the slowest peripheral on the bus : all point-to-point links are paced by a common high frequency clock.

### PCIe Physical Layer

Data bytes transported on a lane are scrambled and encoded into DC-free symbols (using 8b/10b or 128b/130b encoding). Ordered Sets (specific bit patterns) are defined to allow for deskewing and skipping symbols to compensate for clock and delay variations as well as for initializing the link during training. Additional states are defined for power-down modes of varying degrees, and a recovery state can be used to change the link speed.

### PCIe Data Link Layer

The data link layer performs three services for the PCIe link:
sequence Transaction Layer Packets (TLPs) generated by the Transaction Layer,
ensure reliable delivery of the TLPs between two endpoints via an acknowledgement protocol (ACK and NAK signalling) that explicitly requires replay of unacknowledged/errored TLPs, and
initialize and manage flow control credits.

Transaction Layer Packets (TLP) are formatted PCIe packets used to perform read, write, and configuration transactions.

On the transmit side, the Data Link Layer generates an incrementing sequence number for each transmitted TLP, that uniquely identifies it. It is inserted into the header of the TLP. A 32-bit cyclic redundancy check code (Link CRC or LCRC) is also appended to the end of each TLP.

On the receive side, the Data Link Layer checks the LCRC and sequence number of the received TLP. If either the LCRC check fails (indicating a data error), or the sequence-number is out of sequence, then the errored TLP, as well as any subsequently received TLP, are considered invalid and discarded. The receiver sends a negative acknowledgement DLL message (NAK), requesting re-transmission of all TLPs of higher sequence-number. If the LCRC and sequence number of the received TLP are correct, it is treated as valid. The link receiver increments the sequence-number (which tracks the last correctly received TLP), and forwards the valid TLP to the receiver's Transaction Layer. An ACK message is then sent to the remote transmitter, indicating the successful TLP (and predecessors') reception.

If the transmitter receives a NAK message, or no acknowledgement (NAK or ACK) is received after a timeout period expires, the transmitter retransmits all TLPs not positively acknowledged (ACK). The Data Link Layer thus presents a reliable connection to the Transaction Layer, possibly masking the flaws of an unreliable medium.

The number of in-flight, unacknowledged TLPs is limited by a flow control mechanism that is based on two factors:
the size of the transmitter's replay buffer, that stores a copy of all transmitted TLPs to be retransmitted if needed until the remote receiver acknowledges them, and
the flow control credits, which are issued by the receiver to a transmitter and which regulate how many unacknowledged packets can be in transit to prevent buffer overflows.

PCI Express requires all receivers to issue a minimum number of credits, to guarantee a link allows sending configuration and message TLPs.

### PCIe Transaction Layer

PCI Express implements split transactions, which request and response are separated by some time, allowing the link to carry other traffic while the target device prepares data for a response.

### Transaction Layer Packets

Three types of transaction are defined: posted transaction, non-posted transactions and completions.

Posted transactions are transactions where no response is expected, such as a write to memory.

Non-posted transactions require a response that is returned in the form of a completion. Such transactions are implemented by a device to read data from the main memory.

The transaction layer defines a set of transaction layer packets (TLPs), each implementing one of the three transaction types as shown in Table 1.

**Table 1**

| **TLP** | **Type** |
|---|---|
| **Memory Read** | Non-posted |
| **Memory Write** | Posted |
| **I/O Read** | Non-posted |
| **I/O Write** | Non-posted |
| **Configuration Read** | Non-posted |
| **Configuration Write** | Non-posted |
| **Message** | Posted |
| **Completion** | Completion |

In other words, among the possible TLPs,
a memory write operation (MWr) is a PCIe posted transaction that transfers data to a memory-mapped address space, for instance from a device to system memory, whereas a memory read operation (MRd) is a PCIe non-posted transaction that requests data from a memory-mapped address space, for instance from the system memory to a device.

The request TLPs (with a completion being a response, if applicable) are reads and writes to different address spaces, namely memory, I/O and configuration.

Memory accesses are reads and writes of data within a memory-mapped address space. The I/O TLPs provide compatibility with legacy PCI which defines a separate I/O address space (less used in recent systems). The configuration access TLPs are used to access the configuration space of the PCIe made of the control and status registers of the PCIe interface. These 'registers' advertise capabilities, report status and allow configurations. The I/O and Configurations writes, unlike memory writes, are both non-posted, and require a completion.

Messages may be used to implement:
legacy PCI interrupt signalling,
power management,
error signalling,
locked transaction support,
slot power limit support, or
vendor-defined messaging.

The general structure of a TLP is as shown in Figure 2.

Depending on its type and the address width being used (32-bit or 64-bit), a TLP 20 has a 3- or 4-Double-Word (DW) header 22, followed by the data 24, if present. The header indicates the length of the data, which maximum supported payload size is 4096 bytes (1024 DWs) by default. An endpoint can advertise a smaller supported payload size, in powers of 2, down to 128 bytes (32 DWs). An optional CRC can be appended for data integrity checks (same CRC specification as the LCRC) : the TLP digest 26. The presence of the TLP digest is signaled by a bit in the TLP header.

### Interrupt signalling

Signaling an interrupt consists in sending a posted Write TLP over the bus, including a specific address. This address is provided by the host into the peripheral's configuration space during initialization. The operating system, e.g. Linux, can call the target interrupt routine, based on this identifier. Such an interrupt does not need to be cleared if the peripheral does not require an acknowledgment.

### Overhead due to the protocol layers

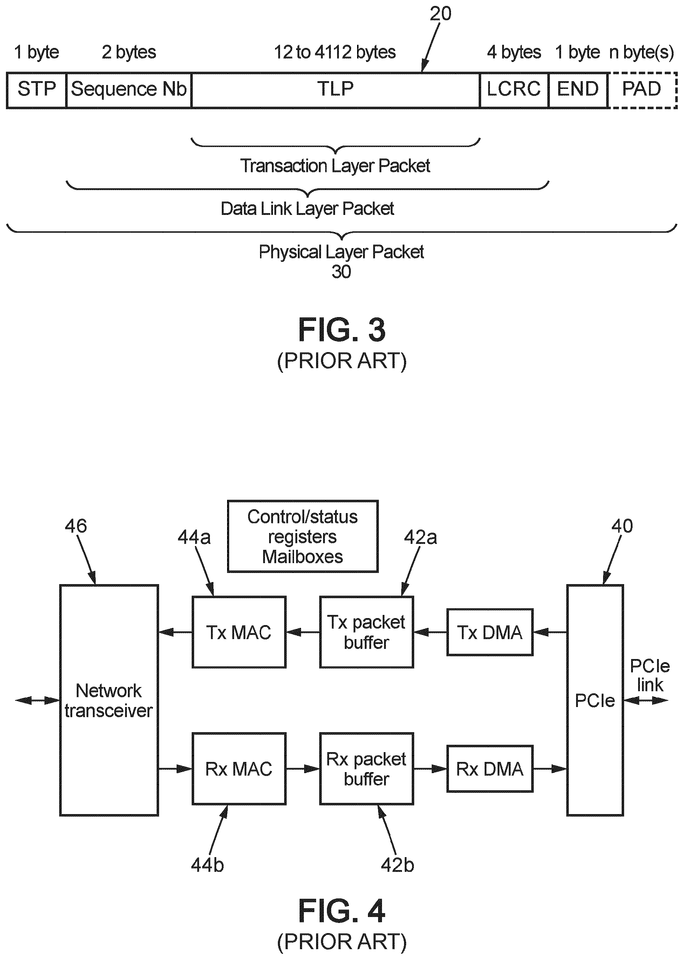

The general structure of a Physical Layer Packet 30 comprising a TLP 20 is depicted on Figure 3.

Each lane of a PCIe Gen 3 interface offers 8 GT/s (Giga Transactions per second) using a 128b/130b encoding, resulting in 7.87 Gb/s at the physical layer. The DLL adds 8 to 10% of overheads due to flow control and acknowledgment messages, leaving around 7.23 Gb/s available at the TLP layer. For each transaction, the physical layer adds 2 bytes of framing and the DLL adds a 6-byte header.

In the case of a Network controller, the TLPs that are the most used are: Memory Read (MRd), Memory Write (MWr), and Completion with Data (CplD). They have a common header, a type-specific header, and an optional trailing digest. The common header (4 bytes) contains information, such as the type of TLP and its length. The header of MWr and MRd TLPs is 12 bytes long (assuming 64-bit addressing), while it is 8 bytes for CplD TLPs. The maximum amount of data carried in a single TLP (Maximum Payload Size (MPS)) is negotiated between the peers. The optional 4-byte digest contains an end-to-end CRC (ECRC). Typical values for the MPS are 256 bytes or 512 bytes.

PCIe MWr transactions are posted transactions and the number of bytes transferred by a DMA write of size sz can be calculated with: $Btx = \left⌈sz/MPS\right⌉ \times MWr _ OverHd + sz$ where MWr_OverHd is 24 bytes long (2-byte framing, 6-byte DLL header, 4-byte TLP header, and 12-byte MWr header).

PCIe MRd requires two TLP types: MRd TLPs, to request data from the peer, and one or more CplD TLPs, for the returned data. Thus, PCIe memory reads consume bandwidth in both directions. An MRd request may only request data up to a certain amount (Maximum Read Request Size, or MRRS), negotiated between the peers. A typical value for the MRRS is 512 bytes. The size of the returned data in a CplD TLPs is limited by the MPS. The number of bytes consumed for a DMA read of size sz is then:$Btx = \left[sz/MRRS\right] \times MRd_OverHd$ $Brx = \left⌈sz/MPS\right⌉ \times CplD _ OverHd + sz$ where MRd_OverHd is 24 bytes long and CPL_OverHd 20 bytes.

The PCIe link standard, e.g., Gen 3, its number of lanes, e.g., x8), and the PCIe configuration of a device, determine the available bandwidth and the values for MPS and MRRS.

In addition to the overhead due the protocol layers, PCIe MRd transactions suffer from their split nature, where the read performance is dependent on the latencies of the processing of the MRd request by the Root Complex, the CPU internal logic and the memory interface.

### PCIe Network controller architecture

The typical architecture of a PCIe Network Controller is depicted on figure 4 and comprises the following processing blocks:
a PCIe interface 40 generates and interprets the PCIe transactions from/to DMA transfers and unitary read/write commands
a Tx packet buffer 42a: a local memory area that temporarily stores packets transferred from the Host memory and to be transmitted through the Tx MAC block. Typically, this buffer can hold several packets of the maximum size allowed by the network protocol.
a Rx packet buffer 42b: a local memory area that temporarily stores packets received through the Rx MAC block and to be transferred to the Host memory. Typically, this buffer can hold several packets of the maximum size allowed by the network protocol.
a TxMAC 44a encapsulates the packet to be transmitted with the Layer 2/MAC information
a RxMAC 44b decapsulates the received packet from the Layer 2/MAC information a network interface, or Network transceiver 46, is a hardware module which handles Ethernet packet transmission and reception, by performing receive and transmit physical layer functions: serializing/deserializing, encoding/decoding, clock recovery, ...

### Packet reception

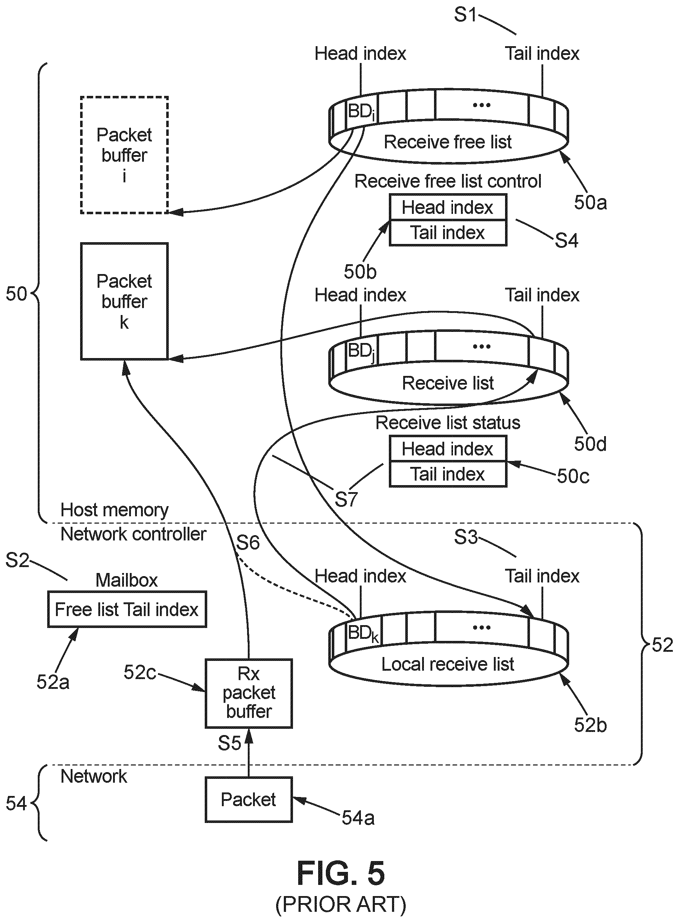

Figure 5 depicts a management process involving a Host memory 50 and a Network controller 52 for handling packet reception from a network 54.

The Host software creates an array of Buffer Descriptor (BD) structures in the Host memory 50, referred to as a receive free list 50a. A buffer descriptor is a data structure that defines a memory location and metadata for packet storage and/or retrieval. Each receive BD within the receive free list describes, among other things, the location in the Host memory of a buffer that stores a packet received from the network. When the Host adds S1 a BD at the tail of the receive free list, it updates S2 a mailbox register 52a internal to the Network controller with receive BD free list's tail index. This operation informs the Network controller that more BDs are available in the receive free list. The Network controller then automatically DMAs S3 the receive BD(s) to an internal memory 52b from the host, starting from the receive BD pointed by the received free list head pointer. When the DMA is completed, the Network controller updates S4 a receive free list status structure 50b in Host memory with the consumed receive BD index to signal it successfully used the BD (new header index in the receive free list). The Network controller keeps this receive BD in internal memory to determine where to store a packet to be received from the network.

Upon reception S5 of a packet 54a from the network in the internal Rx packet buffer 52c of the Network controller, a receive BD in the internal memory of the Network controller gets updated with information about the received packet. The packet is DMAed S6 to the location in Host memory indicated by the BD. The Network controller then updates the receive list tail index in a Status structure 50c associated with a receive list 50d stored in Host memory, and DMAs S7 the BD to that receive list. This operation can be associated with the generation of an interruption signal towards the Host.

It is the responsibility of the Host software to scan the Receive list 50d to check for received packets, consume them and return the corresponding BDs to the receive free list 56.

### Packet transmission

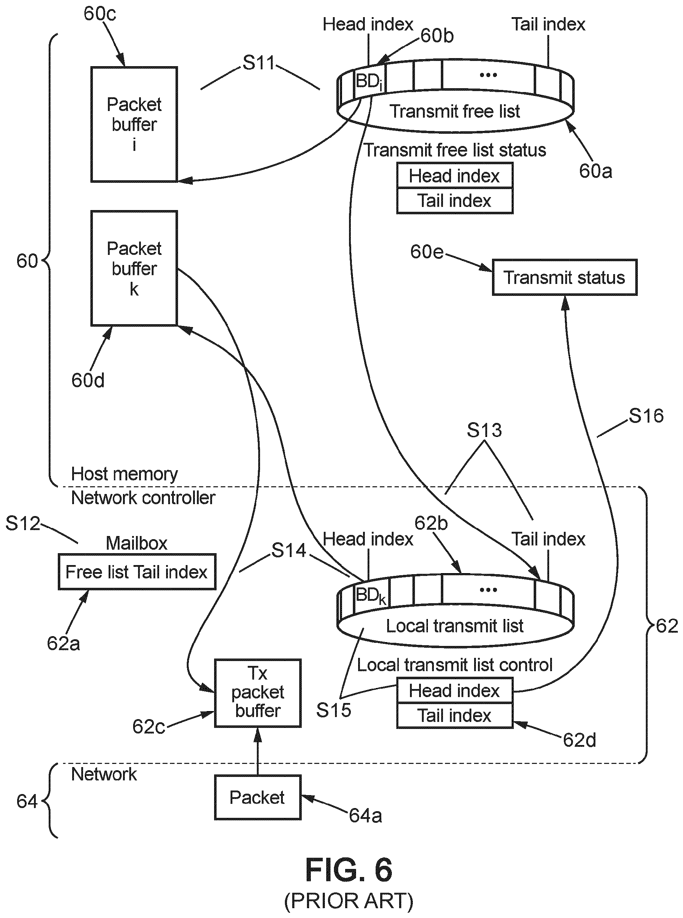

Figure 6 depicts a management process involving a Host memory 60 and a Network controller 62 for handling packet transmission to a network 64.

The Host software creates an array of Buffer Descriptor (BD) structures in Host memory, referred to as a transmit free list 60a. Each transmit BD within the transmit free list describes, among other things, the location in the Host memory of a buffer that stores a packet to be transmitted over the network.

When the Host has a packet ready for transmission, it reads the BD(s) at the head 60b of the transmit free list (using the Transmit free list's Head index) and prepares S11 the frame content into the corresponding packet buffer(s) 60c. It updates (increments) the Transmit free list's Head index and writes S12 it to a Mailbox register 62a internal to the Network controller. This operation informs the Network controller that one or more packets are available for transmission.

The Network controller DMAs S13 the available transmit BDs into its internal memory, appends them at the tail of its local transmit list 62b, by using and incrementing the local transmit list's Tail index. It then reads the BD at the head of its local transmit list (using the Head index) and DMAs S14 the corresponding packet from the corresponding packet buffer 60d in the Host memory to its local transmit packet buffer 62c.

The Network controller updates S15 the Head index in the local transmit list control structure 62c and writes S16 it into the Transmit status structure 60e located in the Host memory. This last operation, possibly associated with the generation of an interrupt signal, indicates to the Host that the transmit BD is consumed.

The Host software can then return the BD to the transmit free list 60a.

### Known optimization strategies for PCIe Network Controllers and Time-Sensitive Networking (TSN) in Industrial Automation

The main objective of high-performance PCI Express-based Network controllers is to optimize the bandwidth of packet transfers between the Host CPU and the Controller.

The peripheral/software interaction described in relation with Figures 5 and 6 is a sample implementation of the mechanisms that permits to reach such transfer performance levels.

For that purpose, several types of measures may be implemented:
Reduction of the number of operations to be performed by the Host CPU (CPU offload) The Host CPU only performs posted transaction (MWr) to the PCIe peripheral Transfer from/to the peripheral to/from Host memory are initiated by the peripheral (DMA write/read), to deal with processor architectures that do not provide efficient Host-controlled channels for transfers of data between the Host memory and the peripherals Smaller control data structures are preferably transferred in batches (via DMA), e.g. Buffer Descriptors
Minimal use of the non-posted transactions causing latency (MRd) by the peripheral and Host CPU
Most of the control data structures reside in the Host memory

Some network drivers, e.g., DPDK (Data Plane Development Kit), also avoid the use of interruptions for servicing received frames and acknowledging frame transmission completions. They rather rely on polling state changes in the control data structures exchanged between the peripheral and the Host CPU.

All these strategies have been mainly developed to accelerate the processing of packets and are optimized for so-called bulk data transfers based on Internet protocols (IP, TCP, UDP, ...) such as those encountered in data centers or telecommunication networks.

However, in other application domains such as Industrial Automation (IA), where real-time processes are interconnected through a network, processing and network latency as well as data transfer determinism are prominent features and specific networking protocols and mechanisms have been implemented to support them.

Some proprietary and standard IA protocols have been specified to be transported on top of Ethernet. They make a use of the Ethernet protocols that is different of the one made by the Internet protocols.

When implementing a control loop between a controller and a set of devices, e.g. to control the different sensors and actuators of a machine, the information transferred and received by the controller to/from the different devices are concatenated in a single Ethernet frame. To limit the processing latency and allow the shortest control loop duration, these pieces of information are inserted/extracted on-the-fly into/from an Ethernet frame. By doing so, it is possible to start the transmission of a frame or the processing of the content of a received frame before its whole content is available.

In addition, network mechanisms have been developed to efficiently support the cyclic nature of the control loops. They are mainly based on transmission techniques relying on Time Division Multiple Access (TDMA), where the communications are organized in a recurring series of time slots, each dedicated to a particular type of communications.

The mechanisms developed by the Time Sensitive Networking Task Group of IEEE 802.1 are among those, and in particular, the Enhancements for Scheduled Traffics (EST, a.k.a. 802.1Qbv) packet transmission scheme.

EST specifies time-aware queue-draining procedures that enable bridges and end stations to schedule the transmission of packets based on a timing derived from a network-wide shared clock (according to IEEE Std 802.1AS).

EST organizes the transmission multiplex in cyclic series of time slots, each time-slot being reserved to the transmission of packets of a given Traffic Class.

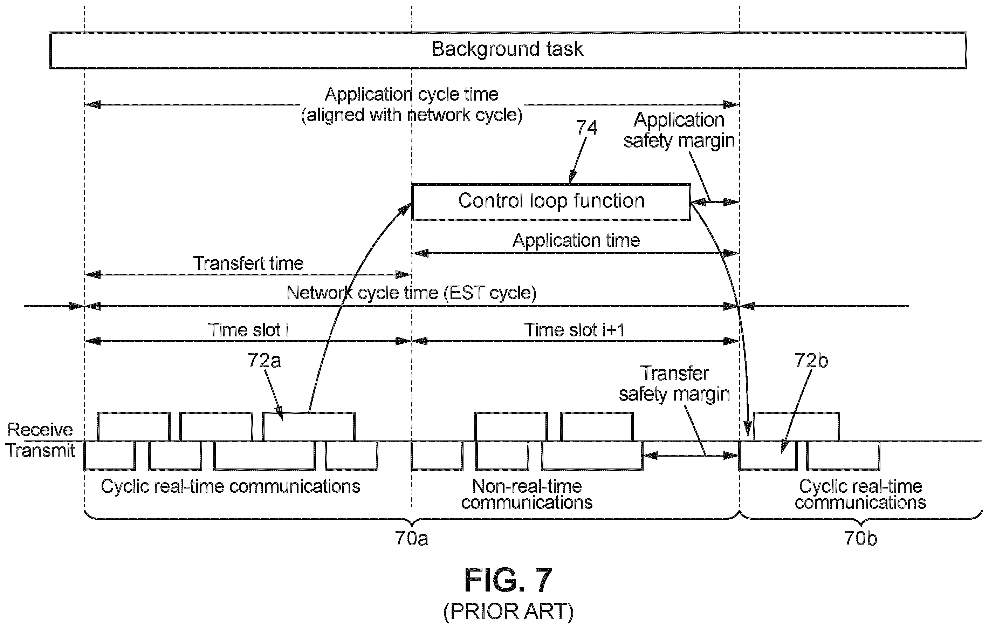

Figure 7 shows a typical implementation where the application and network timings are intertwined: the network cycle and the application cycle are aligned so that the lowest transmission latency can be achieved.

In this implementation, data 72a (for instance data obtained from sensors in industrial automation systems) is received from the remote sensor devices during a given application cycle 70a. The received data is then processed by a control loop function 74 so that updated control data 72b (for instance updated actuator commands in industrial automation systems) can be generated. Finally, the updated control data is sent to the remote actuator devices during the next application cycle 70b.

In the case of an Ethernet network implementing the IEEE 802.1 EST traffic scheduling scheme, the exchanges of control data are performed during fixed recurring time slots. The software implementing the control loop is tightly synchronized on the network cycle and is aware of which control data is to be received and transmitted in given time slots and of the deadline (application safety margin in figure above) before which the updated control data must be prepared and made available to the network interface for transmission.

### Proposed PCIe TSN Ethernet Controller Architecture

An aspect of the technique proposed in the present disclosure is focused on a software and hardware architecture for a PCIe TSN Ethernet Controller. This architecture offers a programming interface that is particularly suitable for the support of low-latency cyclic control loop and data transmission supported by IEEE 802.1's EST.

The proposed architecture takes benefit of the following features of cyclic real-time communication and control loops:
the communications transported in a time slot are determined and known from the application software running in the transmission and reception end points of the communication, based on network management information available to the software.
the Host software is synchronized on the network EST cycle and is aware of the beginning and end times of each time slot. The EST cycle start times and time-slots positions within the EST cycle are provided to the PCIe Network controller based on network management information.

The proposed architecture allows an earlier execution of longer control loop functions within an application. It benefits of the organisation of the PCI Express protocol in packet-based transactions and avoids as much as possible the latencies incurred by some of these transactions.

Details of the proposed architecture, according to possible embodiments, are provided in the next sections.

In the present disclosure, the memory write and memory read operations are executed via PCI Express Transaction Layer Packets (TLPs), specifically using Memory Write (MWr) and Memory Read (MRd) TLPs, ensuring deterministic handling of cyclic real-time communications.

### Low latency frame reception

### Data Structures and parameters

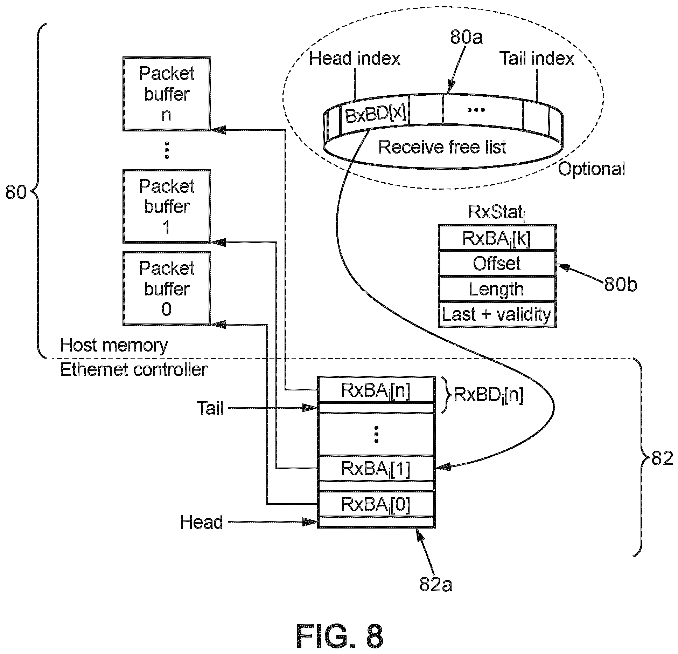

Figure 8 depicts PCIe data structures of a system comprising a Host memory 80 operably connected to a PCIe Controller 82 for the reception of cyclic communications' packets according to possible embodiments of the proposed technique. The PCIe controller 82, when configured to handle packet reception, may be considered an example of a reception module operably connected to the Host memory via a PCI Express bus and to a network interface.

Time slot *i* is a time slot during which packets belonging to cyclic real-time communications are received.

The packets received during a given cyclic real-time communication time slot *i* are allocated a set of receive buffers which are destined to store the received packets in the Host memory 80. The addresses of these buffers (RxBA*ᵢ*[], see below) are write addresses stored in Receive Buffer Descriptors arranged in a fixed array 82a (RxBD*ᵢ*[0, n]) stored within the PCIe controller 82. This array is organized as a list, which top/bottom is pointed to by a couple of Head/Tail pointers. In some implementations, the buffer descriptors are maintained in an internal memory of the PCIe controller or fetched in advance from the host memory, ensuring that the memory addresses specified in the TLPs are immediately available when needed. In some implementations, the buffer descriptors may retain the same address field across multiple consecutive time intervals, ensuring deterministic buffer allocation and reducing the need for frequent updates in real-time applications.

The content of the RxBD*ᵢ*[] may be fixed and reused at each cycle *i*, starting from the Head of the list, or optionally, updated by the PCIe Network controller from a pool of free Receive Buffer Descriptors stored in the Host memory; RxBD[0, x] : the receive free list 80a.

In the former case, the Host software is responsible for initializing the array RxBD*ᵢ*[0, n] stored in the PCIe controller during the configuration of the PCIe controller.

In the latter case, the Host software is responsible for maintaining the receive free list of RxBD[0, x] that is used by the PCIe controller to update its internal array RxBDᵢ[0, n].

A receive frame status register 80b associated with time slot *i*, RxStat*ᵢ*, is stored in a specific Host memory location.

RxStat*ᵢ* contains the following information :
RxBAᵢ[n] : the base write address, in Host memory, of packet buffer n
Offset : the distance, in bytes, from RxBAᵢ[n], of the received data (packet segment)
Length : the length in bytes of the received packet segment
Last : the indication of the packet segment being the last one in a packet
Valid : Valid is significant only when "last" indicates the last segment of a packet in case of Ethernet frames.

The PCIe interface of the PCIe controller is configured with an MPS value for the TLPs of *mps.*

### Operation

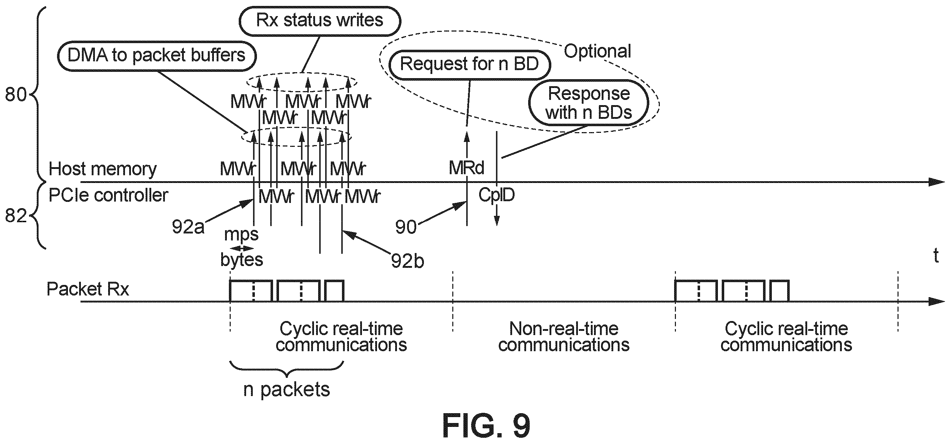

Figure 9 illustrates a possible series of cyclic reception operations in terms of PCIe transactions between the Host memory 80 and the PCIe controller 82 according to possible embodiments of the proposed technique.

If the PCIe Controller operates in the optional mode where it updates its internal array of receive Buffer Descriptors (RxBD*ᵢ*[0, n]) for the reception of packets during time slot *i*, then at some point during time slot *i-1*, it issues an MRd transaction 90 to DMA a series of n Buffer Descriptors starting from the Head of the Receive free list (RxBD[x, x+n]) towards the tail of its internal array of Buffer Descriptors, with n being the numbers of Buffer Descriptors consumed during the previous network cycle. This MRd transaction is generated with a priority higher than the other transactions' issued over the same PCIe link direction during time slot *i-1.*

The receive MAC function of the PCIe controller progressively gets the bytes of a frame from the physical layer interface and stores them in its internal Rx packet buffer. Once the number of received bytes equals *mps,* the PCIe interface triggers an MWr transaction 92a with a payload constituted of these *mps* bytes.

If the frame's reception completes before *mps* bytes are available in the internal Rx packet buffer, an MWr transaction 92b is triggered with a payload constituted of these bytes.

When issuing the MWr transaction 92a transferring the first segment of a packet, the PCIe controller uses as target write address the write address stored in the Buffer Descriptor at the Head of the RxBD*ᵢ*[0, n] array: RxBA*ᵢ*[h]. When generating the subsequent MWr transactions along the frame reception, the target write address is incremented by *mps.*

Upon the transfer of the last segment of a packet, the top (head) of the RxBD*ᵢ*[0, n] array is updated and becomes RxBD*ᵢ*[h+1].

Each time a packet segment is written in the target packet buffer in the Host memory, the Host software is informed of the completion of the corresponding transaction by the PCIe controller writing some status information in the RxStat*ᵢ* register in Host memory and possibly issuing an interruption. This status information may include the write address of the packet buffer (RxBA*ᵢ*[h], the offset and length of the written segment, the indication that the segment is the last one in the packet and the packet reception status as provided by the Rx MAC function. The latest may include a packet error/validity indication (or validity field).

In the case of Ethernet, the integrity of the whole packet not being determined until the Rx MAC function receives the last byte of the packet, it is the responsibility of the Host software to check the integrity of the packet content progressively provided by the PCIe controller, if the application protocol provides the means for these checks, e.g., partial CRC/parity.

If the PCIe Network Controller operates in the mode where it updates its internal array of receive Buffer Descriptors (RxBD*ᵢ*[0, n]) with Buffer Descriptors from the Receive free list, then when the Host software processes the last received segment of a frame, it replenishes the Receive free list by appending at its tail the list of consumed Buffer Descriptors. For that purpose, the Host software uses the information provided in the RxStat*ᵢ* data structure by the PCIe Network Controller.

### Low latency frame transmission

### Data Structures and parameters

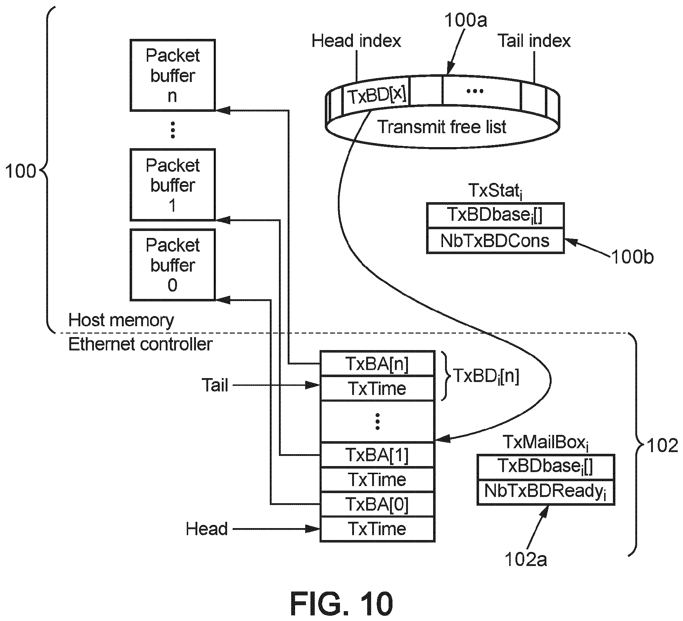

Figure 10 depicts PCIe data structures of a system comprising a Host memory 100 operably connected to a PCIe Controller 102 for the transmission of cyclic communications' packets according to possible embodiments of the proposed technique. The PCIe controller 102, when configured to handle packet transmission, may be considered an example of a transmission module operably connected to the Host memory via a PCI Express bus and to a network interface.

Time-slot *i* is a time-slot during which packets belonging to cyclic real-time communications are transmitted.

TxBD[0, x], the Transmit free list 100a, is an array of Transmit Buffer Descriptors, each pointing to a packet buffer, located in the Host memory, that is to be filled with a packet to be transmitted, i.e. a free transmit packet buffer. The Transmit free list is created and maintained by the Host software.

The addresses of these buffers (TxBA[n], see below) are read addresses arranged in a fixed array 102b (TxBD*ᵢ*[0, n]) stored within the PCIe controller 82. This array is organized as a list, which top/bottom is pointed to by a couple of Head/Tail pointers. The array 102b, in addition to the read address (TxBA[n]) of the associated packet buffer, also stores among other possible information the time the packet is to be transmitted at (TxTime). In some implementations, the buffer descriptors are maintained in an internal memory of the PCIe controller or fetched in advance from the host memory, ensuring that the memory addresses specified in the TLPs are immediately available when needed. In some implementations, the buffer descriptors may retain the same address field across multiple consecutive time intervals, ensuring deterministic buffer allocation and reducing the need for frequent updates in real-time applications.

The Transmit free list is managed through a couple of Head and Tail pointers.

The PCIe Network Controller provides a Mailbox register 102a dedicated to time-slot i, accessible through a MWr transaction, generated by a single store instruction, e.g. a double-word-wide write, executed by the Host's processor. This mailbox, TxMailBox*ᵢ*, contains two indications:
The number of packets to be transmitted in time-slot *i* : NbTxBDReady*ᵢ*
The read address of the first Buffer Descriptor in the list of the Buffer Descriptors pointing to the packets to be transmitted: TxBDBase*ᵢ*[].

A Status register 100b, TxStat*ᵢ*, dedicated to time-slot *i*, located in Host memory, contains two indications :
The number of packets transmitted, i.e., the number of Transmit Buffer Descriptors consumed in time-slot *i* : NbTxBDCons*ᵢ*
The read address of the first Buffer Descriptor in the list of the consumed Buffer Descriptors: TxBDBase*ᵢ*[].

### Operation

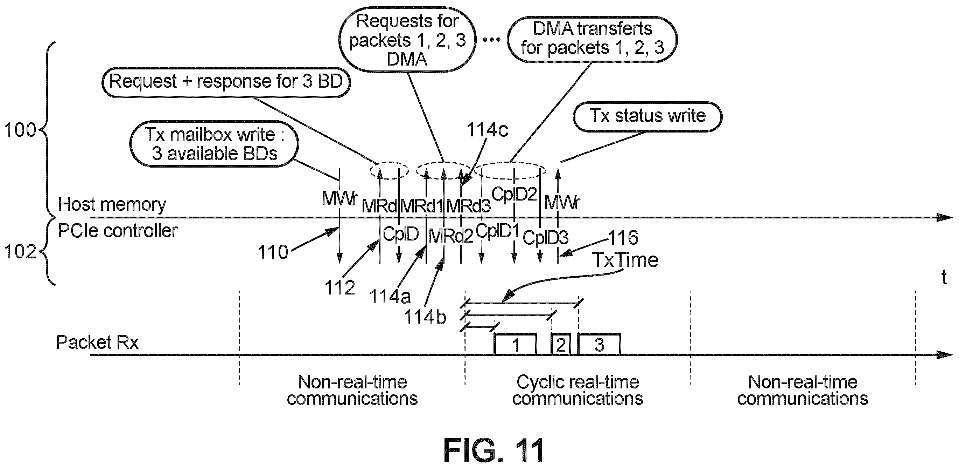

Figure 11 illustrates a possible series of cyclic transmission operations in terms of PCIe transactions between the Host memory 100 and the PCIe controller 102 according to possible embodiments of the proposed technique.

The Host software (the control loop function) prepares the updated control information to be sent to the remote sensor/actuator devices. This information is sent in packets belonging to a cyclic real-time communication transmitted during a time-slot *i*.

The Host software writes updated control data in the packet buffer the Buffer Descriptor at the head of the Transmit free list points to: TxBD[h]. Once the packet content is completely generated, the Buffer Descriptor is added to the list of Buffer Descriptors ready for transmission in time slot *i*. The number of Buffer Descriptors ready for transmission in time slot *i* (NbTxBDReady*ᵢ*) is then incremented.

The Host software also indicates the time the frame must be transmitted at in the Buffer Descriptor, via the TxTime field.

The same operations are performed for each packet to be transmitted during time-slot *i.*

It is the responsibility of the Host software to guarantee that the set of packets to be sent during time slot *i* is prepared at a time ahead of the time slot start (TxStart*ᵢ*), namely before t = TxStart*ᵢ* - TxGuard*ᵢ*. The predefined offset, denoted as TxGuardᵢ, is at least equal to the worst-case completion latency of the memory read operation. This ensures that the requested data is available in the PCIe controller's internal buffer before the corresponding time interval for transmission begins. TxGuard*ᵢ* may be determined for instance so that the PCIe Network Controller can fetch the set of Buffer Descriptors at TxStart*ᵢ* - TxGuard*ᵢ* and start transferring the frame into its internal Tx packet buffer before the packet transmission time (TxTime) indicated in the corresponding Buffer Descriptor.

It is also the responsibility of the Host software to guaranty that the set of packets prepared for transmission in time slot *i* fits into that time slot and, in particular, that the transmission of the last packet of the set is complete by the end of the time slot when the network access is compliant to IEEE Std 802.1Qbv.

The Host software informs the PCIe network controller that a set of packet buffers Descriptors is ready for transmission by writing, through a single MWr transaction 110 towards time slot *i*'s transmit mailbox (TxMailBox*ᵢ*), the read address of the first Buffer Descriptor to be transferred into TxBD*ᵢ*[0, n] and the number of Buffer Descriptors ready for transmission (NbTxBDReady*ᵢ*).

The Host software then updates the Head pointer of the Transmit free list (TxBD[0, x]) accordingly.

This operation can be performed frame by frame, by setting NbTxBDReady*ᵢ* to 1 and providing the successive read addresses of the Buffer Descriptors to be transferred into TxBD*ᵢ*[0, n]. Setting NbTxBDReady*ᵢ* to 0 indicates that no frame has to be transmitted during time-slot *i*.

The PCIe Network Controller detects each update of TxMailBox*ᵢ* and upon this event, transfers, through an MRd transaction 112, the NbTxBDReady*ᵢ* Buffer Descriptors into its internal transmit Buffer Descriptor list TxBD*ᵢ*[0, n] from the Host memory.

Once this exchange is complete, the PCIe Network Controller starts the transfer of the packet(s) pointed to by the set of transmit Buffer Descriptors into its local frame buffer. It generates a burst of MRd transactions 114a, 114b, 114c (possibly flow-controlled by the PCIe interface at the other end of the PCIe link) that trigger in response the DMA transfers from the Host memory's packet buffers to the PCIe controller's internal Tx packet buffer.

Once all the packets transferred, the PCIe Network Controller signals the Host software that the packet buffers are freed and the associated Buffer Descriptors can be returned to the Transmit free list. The Host software uses the information stored in TxStat*ᵢ* to append the "freed" Buffer Descriptors at the tail of the Transmit free list.

Once this transfer is complete, The PCIe Network Controller acknowledges the reception of the NbTxBDReady*ᵢ* Buffer Descriptors by writing, through a MWr transaction 116, the content of TxMailbox*ᵢ* back to the Transmit Status register located in Host memory (TxStat*ᵢ*).

The actual transmission of the frame over the Ethernet link by the Tx MAC function is triggered at the time indicated in the associated Buffer Descriptor (TxTime).

### Impact on the Control loop processing

In this implementation, data 122a is received from the remote sensor devices during a given application cycle 120a. The received data is then processed by a control loop function 124 so that updated control data 122b can be generated. Finally, the updated control data is sent to the remote actuator devices during the next application cycle 120b.

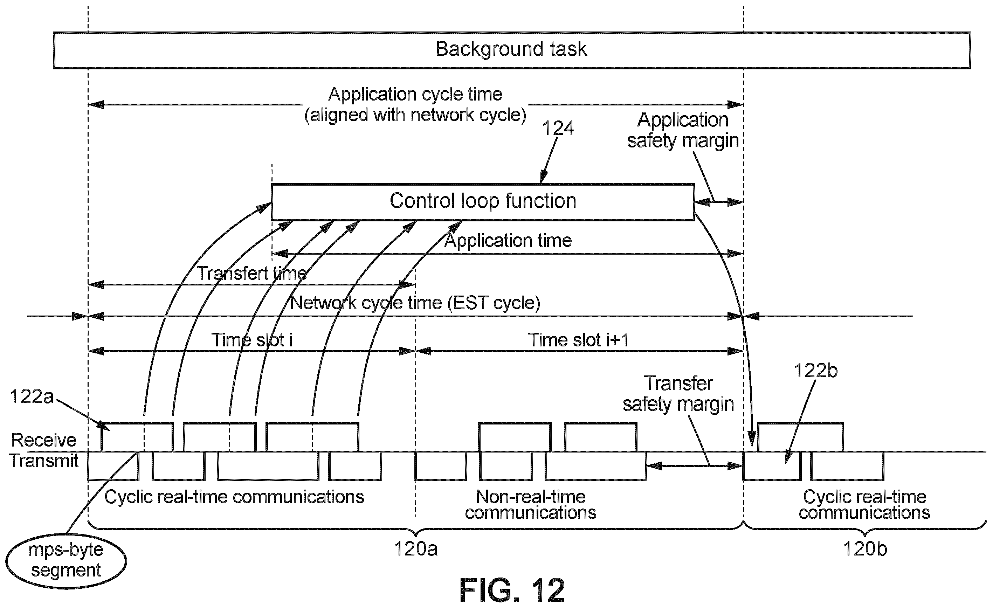

When the real-time application communication protocol allows the exploitation of the packet content along their reception, the control loop function 124 can start processing the received data 122a before the packets are totally received as shown in Figure 12.

The control loop processing function can be invoked earlier, thus reducing its latency, and its execution time can be extended.

### Nonreal-time frame transmission/reception

Frames transmitted and received in other time slots (such as in time slots that are not reserved for cyclic real-time transmissions) can be handled as described in the present document in relation with Figures 1 to 7.

### Possible hardware configurations

The proposed technique may be implemented within a single computing device or in a system comprising multiple computing devices, each fulfilling specific functions.

For example, a single computing device may be configured to integrate all functions necessary for handling network communications, processing received data, and managing memory accesses in accordance with deterministic cyclic real-time communication requirements. Alternatively, a distributed system may include separate computing devices dedicated to reception, processing, and transmission tasks, each communicating via a network infrastructure.

Any suitable hardware and/or software means may be used for the practical implementation of the proposed technique. In general, although aspects of the proposed technique may be described in this document as a process, a device, a system, a procedure, a method, or an operation, it is noted that the proposed technique may also encompass a computer-readable storage medium storing instructions that, when executed by a processor operably connected to a memory and a network interface, enable the execution of the processes, devices, systems, procedures, methods, or operations described herein.

In some embodiments, the proposed technique may be implemented within a host device or host system, which comprises at least one reception module and/or at least one transmission module. A PCIe controller within the host device may serve as both the reception module and the transmission module, or separate PCIe controllers may be used for each function.

A reception module includes a processor operably connected to a memory of the host device (or host system) via a PCI Express bus and to a network interface. The reception module is configured to obtain data from the network via the network interface and manage memory write operations via PCI Express transactions to store incoming deterministic cyclic real-time communication data in designated memory locations.

A transmission module includes a processor operably connected to a memory of the host device (or host system) via a PCI Express bus and to a network interface. The transmission module is configured to retrieve data from memory via PCI Express transactions and manage memory read operations to transmit outgoing deterministic cyclic real-time communication data via the network interface at designated time intervals.

The host device or host system may include a single PCIe controller performing both reception and transmission functions or multiple PCIe controllers, each dedicated to either reception or transmission. The allocation of these functions may depend on the architecture and performance requirements of the system, such as network latency constraints, available PCIe lanes, and the required determinism of data transfers.

Examples of computing devices suitable for implementing the proposed technique include, but are not limited to, personal computers, industrial automation controllers, cloud servers, virtualization platforms, embedded systems (e.g., within vehicles or robotic systems), communication infrastructure equipment (e.g., network switches or base stations), and other specialized computing hardware.

Such a host device or host system comprises the following components:
an input interface operably connected to a network source (e.g., an Ethernet transceiver or TSN-enabled communication module),
an output interface operably connected to a communication or processing unit (e.g., another computing device in the network, a real-time processing module, or a user interface),
a processor 31 or processing unit, responsible for executing instructions related to memory management, PCIe transaction handling, and real-time communication processing, and
a memory 32 storing instructions in the form of a computer program, which when executed by the processor, enables the system to perform the operations described in this document, including memory access scheduling, PCIe data transfers, and network interface coordination.

## Claims

1. A method for managing data communication in a networked environment, the method being implemented by a reception module (82) operably connected to a memory (80) via a PCI Express bus and to a network interface, the method comprising, after data is obtained using the network interface during a time interval reserved for deterministic cyclic real-time communications:
issuing, during the time interval, a PCI Express transaction layer packet specifying a memory write operation (92a, 92b), the transaction layer packet being configured to initiate a direct memory access transfer of at least a portion of the obtained data to a write address in the memory, wherein the write address is reserved for incoming deterministic cyclic real-time communications.

2. The method of the preceding claim, wherein:
the write address is obtained from a buffer descriptor,
the buffer descriptor includes an address field specifying the write address.

3. The method of the preceding claim, wherein:
the buffer descriptor includes a validity field, and
the validity field is updated upon a completion of the write operation at the write address.

4. The method of any one of the preceding claims, further comprising updating, outside the time intervals reserved for deterministic cyclic real-time communications, the buffer descriptor so as to ensure that the buffer descriptor is up-to-date before being used for the memory write operation.

5. A method for managing data communication in a networked environment, the method being implemented by a transmission module (102) operably connected to a memory (100) via a PCI Express bus and to a network interface,
the method comprising:
issuing, between two consecutive time intervals reserved for deterministic cyclic real-time communications, a PCI Express transaction layer packet specifying a memory read operation (112, 114a, 114b), the transaction layer packet being configured to initiate a direct memory access transfer of data from a read address in the memory, the read address being reserved for outgoing deterministic cyclic real-time communications,
obtaining the data from the read address, and
transmitting (116) the obtained data using the network interface during the next time interval reserved for deterministic cyclic real-time communications after the data has been obtained.

6. The method of the preceding claim, wherein:
the read address is obtained from a buffer descriptor before issuing the PCI Express transaction layer packet, and
the buffer descriptor includes an address field specifying the read address.

7. The method of the preceding claim, wherein:
the buffer descriptor includes a validity field, and
the validity field is updated upon a completion of the read operation at the read address,
thereby releasing the read address for use in a subsequent time interval.

8. The method of claim 5 or 6, wherein:
the transaction layer packet specifying the memory read operation is issued at a predefined offset before the beginning of the next time interval reserved for deterministic cyclic real-time communications,
the offset being at least equal to a worst-case completion latency of the memory read operation.

9. The method of any one of claims 2 to 4 or 6 to 8, wherein the buffer descriptor is previously stored in or accessible to a network controller so that the address specified by the PCI Express transaction layer packet is made available without delay.

10. The method of any one of claims 2 to 4 or 6 to 9, wherein the address field remains unchanged across multiple consecutive time intervals reserved for deterministic cyclic real-time communications.

11. The method of any one of the preceding claims, wherein the deterministic cyclic real-time communications are defined according to a Time-Sensitive Networking standard.

12. A computer program comprising instructions which, when executed by a processor operably connected to a memory via a PCI Express bus and to a network interface, cause the processor to perform the method of any one of the preceding claims.

13. A reception module (82) comprising a processor operably connected to a memory (80) via a PCI Express bus and to a network interface, the reception module being configured to:
obtain data using the network interface during a time interval reserved for deterministic cyclic real-time communications, and
issue, during the time interval, a PCI Express transaction layer packet specifying a memory write operation (92a, 92b), the transaction layer packet being configured to initiate a direct memory access transfer of at least a portion of the obtained data to a write address in the memory, wherein the write address is reserved for incoming deterministic cyclic real-time communications.

14. A transmission module (102) comprising a processor operably connected to a memory (100) via a PCI Express bus and to a network interface,
the transmission module being configured to:
issue, between two consecutive time intervals reserved for deterministic cyclic real-time communications, a PCI Express transaction layer packet specifying a memory read operation (112, 114a, 114b), the transaction layer packet being configured to initiate a direct memory access transfer of data from a read address in the memory, the read address being reserved for outgoing deterministic cyclic real-time communications,
obtain the data from the read address, and
transmit (116) the obtained data using the network interface during the next time interval reserved for deterministic cyclic real-time communications after the data has been obtained.

15. A communication device comprising the reception module of claim 12 and the transmission module of claim 13.
